# EUROPÄISCHE PATENTSCHRIFT

(11) **EP 3 860 913 B1**
(45) Veröffentlichungstag und Bekanntmachung des Hinweises auf die Patenterteilung: **26.10.2022**
(21) Anmeldenummer: 19779841.6
(22) Anmeldetag: 26.09.2019
(51) Int. Cl.: G01S 13/75, G01S 13/88, B64D 9/00, B64F 1/32, G01S 19/14

(54) **VERFAHREN UND ANORDNUNG ZUR DETEKTION DER KORREKTEN ZUFUHR VON OBJEKTEN**
METHOD AND ARRANGEMENT FOR DETECTING THE CORRECT SUPPLY OF OBJECTS
PROCÉDÉ ET ENSEMBLE DE DÉTECTION DE LA FOURNITURE EN BONNE ET DUE FORME D'OBJETS

(30) Priorität: 02.10.2018 AT 508412018
(43) Veröffentlichungstag der Anmeldung: 11.08.2021
(73) Patentinhaber: Metter, Margarete, 3322 Viehdorf (AT)
(72) Erfinder: METTER, Joachim, 3322 Viehdorf (AT); METTER, Margarete, 3322 Viehdorf (AT)
(74) Vertreter: KLIMENT & HENHAPEL
(86) Internationale Anmeldenummer: PCT/EP2019/076057
(87) Internationale Veröffentlichungsnummer: WO 2020/069970

(56) Entgegenhaltungen:
- US-A1- 2013 321 122
- US-A1- 2014 184 804
- US-A1- 2016 374 001
- US-B1- 6 281 797

## Beschreibung

Die Erfindung betrifft ein Verfahren zur Detektion und Sicherstellung der korrekten Zufuhr eines mit elektronischen Komponenten versehenen Objektes von einem Zufuhrbereich entlang einer vorgegebenen Zufuhrrichtung in einen dem Objekt zugeordneten Zielbereich in einem elektronisch inaktiven Zustand des Objektes, gemäß dem Oberbegriff von Anspruch 1. Die Erfindung betrifft des Weiteren eine Anordnung zur Detektion und Sicherstellung der korrekten Zufuhr eines mit elektronischen Komponenten versehenen Objektes von einem Zufuhrbereich entlang einer vorgegebenen Zufuhrrichtung in einen dem Objekt zugeordneten Zielbereich in einem elektronisch inaktiven Zustand des Objektes, gemäß dem Oberbegriff von Anspruch 6.

Technische Entwicklungen in der Sensortechnik sowie in der Kommunikationstechnik ermöglichen es zunehmend Objekte mit Sensoren zu versehen und sie in erdgebundene oder satellitengestützte Kommunikationsnetzwerke einzubinden. Auf diese Weise können per Fernabfrage eine Vielzahl an Zustandsparametern für das Objekt erfasst und abgerufen werden. Die Objekte verfügen hierfür zumeist auch über elektronische Komponenten wie Sende- und Empfangseinheiten, um Daten über drahtlose Datenverbindungen senden und empfangen zu können. Diese elektronische Aktivität der Objekte im Allgemeinen und insbesondere die mit dem drahtlosen Datenaustausch verbundene Funkaktivität im Speziellen sind jedoch nicht immer unproblematisch. Ein Beispiel ist die Luftfahrt, wo elektronische Komponenten von Geräten und Objekten die Bordelektronik stören können und somit ein Sicherheitsrisiko darstellen. Weitere Beispiele sind im Gesundheitsbereich zu finden, wo es Behandlungsbereiche gibt, in denen elektronische Komponenten diagnostische oder therapeutische Vorgänge stören könnten. Auch in Produktionsbetrieben gibt es zunehmend Bereiche, in denen elektronische Komponenten Produktionsprozesse stören können und daher zu vermeiden sind. Diese Bereiche werden im Folgenden als Zielbereiche bezeichnet, in denen mit elektronischen Komponenten versehene Objekte nur in einem elektronisch inaktiven Zustand verweilen dürfen. Objekte, die mit elektronischen Komponenten versehen sind und in diese Zielbereiche gebracht oder aus ihnen entfernt werden müssen, sind daher im Zuge ihrer Zufuhr in den Zielbereich in einen elektronisch inaktiven Zustand zu bringen. Unter einem "elektronisch inaktiven" Zustand des Objekts wird hier verstanden, dass alle elektronischen Komponenten des Objekts ausgeschalten sind, sodass das Objekt insbesondere auch unfähig zur Emission modulierter elektromagnetischer Felder, wie sie zur Übermittlung von Daten benötigt werden, ist.

In der Luftfahrt wären das beispielsweise Frachtcontainer für Gepäck und Frachtgut, die in den Frachtraum eines Flugzeuges verladen und entladen werden müssen. Diese Frachtcontainer werden auch als ULDs (Unit Load Device) bezeichnet und werden zunehmend mit Positionsermittlungseinheiten ausgestattet, die über Datenverbindungen mit zentralen Steuereinheiten kommunizieren, um jederzeit die Position eines jeden ULDs zu kennen. Diese Positionsermittlungseinheiten werden auch als "Tracking"-Systeme bezeichnet und basieren auf bekannten Technologien wie GPS, EGNOS oder DGPS. Die hierfür erforderliche elektronische Aktivität zur Erfassung und drahtlosen Übermittlung der Positionsinformation stellt ein Problem für die Verladefähigkeit des ULDs in das Flugzeug dar, da internationale Luftfahrtregeln der IATA (International Air Transport Association) vorsehen, dass ULDs an Bord eines Flugzeuges keine elektronische Aktivität aufweisen dürfen.

In der US 6,281,797 B1 wurde daher vorgeschlagen einen Frachtcontainer nicht nur mit einer Positionsermittlungseinheit und entsprechenden Sende- und Empfangseinheiten zur Übermittlung der Positionsinformation auszustatten, sondern auch mit Sensoren, die die Anwesenheit eines Flugzeuges detektieren und in diesem Fall die Sende- und Empfangseinheiten zur Übermittlung der Positionsinformation abschalten. Als Beispiel solcher Sensoren werden etwa optische Sensoren genannt, die entsprechende Codes an Flugzeugen identifizieren, oder Sensoren für bestimmte flugzeugspezifische Frequenzen. Nachteilig dabei ist, dass es zu vielen Fehlabschaltungen kommt, weil zwar die Anwesenheit eines Flugzeuges zuverlässig detektiert wird, aber nicht das Flugzeug selbst identifiziert wird, und ob es sich dabei tatsächlich um den korrekten Zielbereich handelt. Die US 6,281,797 B1 nennt zudem weitere Beispiele, die eine Anordnung von Sensoren im Frachtraum des Flugzeuges selbst vorsehen, sodass sich die Frachtcontainer bereits an Bord des Flugzeuges befinden, ohne dass sie sich in einem elektronisch inaktiven Zustand befinden. Ein solches System wäre durch die IATA nicht genehmigungsfähig und somit nicht praxistauglich.

US 2013/321122 A1 offenbart drahtlose Verfolgungssysteme und Vorrichtungen zum Erfassen des Status von Flugzeugfrachtcontainern. Das System verwendet ein Sensorarray, um die Verfolgungsgeräte nach Bedarf zu deaktivieren und zu aktivieren, um die FAA-Vorschriften zu erfüllen. Die Verfolgungssysteme verwenden eine Reihe von Bildverarbeitungssensoren und/oder Trägheits-(Bewegungs-)Sensoren, um zu bestimmen, wann das Gerät aktiviert und deaktiviert werden soll.

Es besteht daher das Ziel der Erfindung darin, einerseits die korrekte Zufuhr eines Objektes in einen Zielbereich zu erkennen und eine drohende Zufuhr in einen falschen Zielbereich zu stoppen, und andererseits auch sicherzustellen, dass das Objekt im Zuge der Zufuhr in den Zielbereich in einen elektronisch inaktiven Zustand gebracht wird.

Dieses Ziel wird durch die Merkmale von Anspruch 1 und 6 erreicht. Anspruch 1 bezieht sich auf ein Verfahren zur Detektion und Sicherstellung der korrekten Zufuhr eines mit elektronischen Komponenten versehenen Objektes von einem Zufuhrbereich entlang einer vorgegebenen Zufuhrrichtung in einen dem Objekt zugeordneten Zielbereich in einem elektronisch inaktiven Zustand des Objektes. Erfindungsgemäß wird hierbei vorgeschlagen, dass einer im Zufuhrbereich angeordneten, zufuhrbereichsseitigen Baugruppe und einer am Objekt angeordneten und die elektronischen Komponenten enthaltenden, objektseitigen Baugruppe von einer zentralen Steuereinheit mithilfe einer bidirektionalen Datenverbindung eine den Zielbereich identifizierende Zielbereichsinformation übermittelt wird, mit der in der objektseitigen Baugruppe ein überschreibbarer Speicher eines passiven RFID-Transponders beschrieben wird, wobei bei Detektion zweier im Zufuhrbereich in Zufuhrrichtung aufeinanderfolgend unterscheidbar angeordneter Signalbereiche zweier aktiver RFID-Transponder der zufuhrbereichsseitigen Baugruppe mittels des am Objekt angeordneten, passiven RFID-Transponders die objektseitige Baugruppe mithilfe eines vom passiven RFID-Transponder generierten Ausschaltsignals in einen elektronisch inaktiven Zustand geschalten wird, falls die beiden Signalbereiche in Zufuhrrichtung aufeinanderfolgend detektiert werden, und mithilfe eines vom passiven RFID-Transponder generierten Einschaltsignals in einen elektronisch aktiven Zustand, falls die beiden Signalbereiche entgegen der Zufuhrrichtung aufeinanderfolgend detektiert werden, und bei aufeinanderfolgender Detektion des passiven RFID-Transponders der objektseitigen Baugruppe mittels der beiden aktiven RFID-Transponder der zufuhrbereichsseitigen Baugruppe ein Vergleich der im passiven RFID-Transponder gespeicherten und von den aktiven RFID-Transpondern ausgelesenen Zielbereichsinformation mit der der zufuhrbereichsseitigen Baugruppe von der zentralen Steuereinheit übermittelten Zielbereichsinformation erfolgt, wobei bei fehlender Übereinstimmung der jeweiligen Zielbereichsinformationen die Zufuhr des Objektes in den Zielbereich gestoppt wird.

Erfindungsgemäß ist somit ein Zufuhrbereich vorgesehen, der sich insbesondere dadurch auszeichnet, dass in ihm eine vorgegebene Zufuhrrichtung der Objekte zum Zielbereich definiert ist. Bei diesem Zufuhrbereich kann es sich etwa um ULD-Ladesysteme wie Laderampen und dergleichen im Luftfahrtbereich handeln, oder um den Eingangsbereich in den Zielbereich einer Produktionsanlage. In diesem Zufuhrbereich sind in Zufuhrrichtung zwei aktive RFID-Transponder so angeordnet, dass ihre jeweiligen Signalbereiche in Zufuhrrichtung unterscheidbar aufeinanderfolgen. Diese aktiven RFID-Transponder sind dazu eingerichtet einen am Objekt angeordneten passiven RFID-Transponder zu detektieren und auszulesen. Der am Objekt angeordnete passive RFID-Transponder ist wiederum dazu eingerichtet die zufuhrbereichsseitig angeordneten, aktiven RFID-Transponder zu detektieren und von ihnen ausgelesen zu werden. Da die Signalbereiche der beiden zufuhrbereichsseitig angeordneten, aktiven RFID-Transponder unterscheidbar sind, kann sowohl von den zufuhrbereichsseitig angeordneten, aktiven RFID-Transponder als auch vom objektseitig angeordneten, passiven RFID-Transponder festgestellt werden, ob sich das Objekt in Zufuhrrichtung bewegt oder gegen die Zufuhrrichtung, also ob das Objekt sich auf den Zielbereich zu bewegt, oder von ihm weg bewegt.

Abhängig von dieser Information werden objektseitig und zufuhrbereichsseitig erfindungsgemäß unterschiedliche Aktivitäten gesetzt. Objektseitig wird erfindungsgemäß mithilfe eines vom passiven RFID-Transponder generierten Ausschaltsignals die die elektronischen Komponenten enthaltende, objektseitige Baugruppe in einen elektronisch inaktiven Zustand geschalten, falls die beiden Signalbereiche in Zufuhrrichtung detektiert werden. In einem solchen elektronisch inaktiven Zustand ist das Objekt insbesondere auch unfähig zur Emission modulierter elektromagnetischer Felder, indem beispielsweise auch Sende- und Empfangseinrichtungen für die bidirektionale Datenverbindung mit der zentralen Steuereinheit abgeschaltet werden. Erst wenn die beiden Signalbereiche der zufuhrbereichsseitigen, aktiven RFID-Transponder vom objektseitigen, passiven RFID-Transponder in umgekehrter Abfolge detektiert werden, also eine Bewegung entgegen der Zufuhrrichtung detektiert wurde, wird die objektseitige Baugruppe mithilfe eines vom passiven RFID-Transponder generierten Einschaltsignals wieder in einen elektronisch aktiven Zustand geschalten, in dem beispielsweise auch Sende- und Empfangseinrichtungen für die bidirektionale Datenverbindung mit der zentralen Steuereinheit wieder in Betrieb sind. Auf diese Weise wird sichergestellt, dass die objektseitige Baugruppe nicht bereits bei Interaktion mit "irgendeinem" RFID-Transponder abgeschaltet wird, sondern erst dann, wenn tatsächlich eine Zufuhrbewegung in den Zielbereich, also beispielsweise ein Verladevorgang eines ULD in den Frachtraum eines Flugzeuges, detektiert wird. Somit können Fehlabschaltungen vermieden werden. Andererseits ist ein Verladevorgang immer auch mit einer Abschaltung der die elektronischen Komponenten enthaltenden, objektseitigen Baugruppe verbunden, sodass das Objekt im Zuge des Verladevorganges zuverlässig in einen elektronisch inaktiven Zustand gebracht wird und einen elektronisch inaktiven Zustand einnimmt, sobald es im Zielbereich ist, etwa an Bord eines Flugzeuges. Diese Abschaltung der elektronischen Komponenten bedarf auch keiner menschlichen Intervention durch Bedienpersonal, sodass Bedienfehler ausgeschlossen sind.

Zufuhrbereichsseitig wird erfindungsgemäß bei aufeinanderfolgender Detektion des passiven RFID-Transponders der objektseitigen Baugruppe mittels der beiden aktiven RFID-Transponder der zufuhrbereichsseitigen Baugruppe, also beispielsweise bei einer Bewegung des Objektes in den Zielbereich, ein Vergleich der im passiven RFID-Transponder gespeicherten und von den aktiven RFID-Transpondern ausgelesenen Zielbereichsinformation mit der der zufuhrbereichsseitigen Baugruppe von der zentralen Steuereinheit übermittelten Zielbereichsinformation vorgenommen. Bei fehlender Übereinstimmung wird die Zufuhr des Objektes zum Zielbereich gestoppt. Eine fehlende Übereinstimmung ist auch dann gegeben, wenn kein Vergleich vorgenommen werden konnte, etwa weil vom objektseitigen, passiven RFID-Transponder keine Zielbereichsinformation ausgelesen werden konnte. Auf diese Weise wird sichergestellt, dass das Objekt stets dem korrekten und ihm zugeordneten Zielbereich zugeführt wird.

Da sich die Zielbereichsinformation auch ändern kann und sich in der Praxis in vielen Anwendungen auch regelmäßig ändern wird, ist erfindungsgemäß in der objektseitigen Baugruppe ein überschreibbarer Speicher für den passiven RFID-Transponder vorgesehen, dem seine aktuelle Zielbereichsinformation über die bidirektionale Datenverbindung übermittelt wird. Vorzugsweise ist der Speicher des passiven RFID-Transponders als nicht-flüchtiger Speicher ausgeführt, sodass er gespeicherte Daten auch im stromlosen Zustand beibehält. Der Speicher des passiven RFID-Transponders wird auch dazu benutzt, die in den Signalbereichen der aktiven RFID-Transponder der zufuhrbereichsseitigen Baugruppe detektierten Signale zu speichern, um aus der zeitlichen Abfolge dieser voneinander unterscheidbaren Signale die Zufuhrrichtung zu ermitteln.

Des Weiteren kann vorgesehen sein, dass die zutreffende oder fehlende Übereinstimmung der jeweiligen Zielbereichsinformationen mithilfe einer im Zufuhrbereich angeordneten Anzeigeeinheit angezeigt wird. Eine zutreffende Übereinstimmung der jeweiligen Zielbereichsinformationen kann auf der Anzeigeeinheit beispielsweise optisch und/oder akustisch zur Anzeige gebracht werden, etwa in Form einer grünen Ampel. Eine fehlende Übereinstimmung der jeweiligen Zielbereichsinformationen wird ebenfalls auf der Anzeigeeinheit optisch und/oder akustisch zur Anzeige gebracht, etwa in Form einer roten Ampel. Ein im Zufuhrbereich befindliches Bedienpersonal kann in weiterer Folge die Zufuhr in den Zielbereich stoppen und das betreffende Objekt aussortieren.

Des Weiteren wird vorgeschlagen, dass im elektronisch aktiven Zustand der objektseitigen Baugruppe mithilfe einer Positionsermittlungseinheit der objektseitigen Baugruppe die Position des Objektes wiederholt ermittelt und über die bidirektionale Datenverbindung an die zentrale Steuereinheit gesendet wird. Die Positionsermittlungseinheit basiert etwa auf bekannten Technologien wie GPS, EGNOS oder DGPS. Die Übermittlung der vom Objekt ermittelten Position an die zentrale Steuereinheit ermöglicht der zentralen Steuereinheit die Identifizierung des Objektes sowie die Überwachung seiner Bewegungen auch außerhalb des Zufuhrbereiches. Hierbei kann insbesondere vorgesehen sein, dass im elektronisch aktiven Zustand der objektseitigen Baugruppe bei Detektion der beiden im Zufuhrbereich in Zufuhrrichtung aufeinanderfolgend angeordneten Signalbereiche der beiden aktiven RFID-Transponder der zufuhrbereichsseitigen Baugruppe mittels des am Objekt angeordneten, passiven RFID-Transponders die objektseitige Baugruppe die zuletzt ermittelte Position des Objektes über die bidirektionale Datenverbindung an die zentrale Steuereinheit sendet, bevor die objektseitige Baugruppe mithilfe des vom passiven RFID-Transponder generierten Ausschaltsignals in einen elektronisch inaktiven Zustand geschalten wird. Diese Übermittlung kann auch von einer entsprechenden Information begleitet sein, dass ein Zufuhrvorgang in den Zielbereich von der objektseitigen Baugruppe detektiert wurde und das Ausschaltsignal für die objektseitige Baugruppe unmittelbar bevorsteht. Die zentrale Steuereinheit speichert den erfolgreichen Verladevorgang und beendet vorläufig die Überwachung des betreffenden Objektes. Handelt es sich bei dem Objekt beispielsweise um einen ULD, so wird die Überwachung des Objektes beendet, da sich das Objekt im Frachtraum eines Flugzeuges befindet.

Sobald das Objekt den Zielbereich wieder verlässt, etwa wenn es sich bei dem Objekt um einen ULD handelt, der am Zielflughafen von einem Flugzeug entladen wird, und der passive RFID-Transponder die beiden Signalbereiche der im Zufuhrbereich installierten, aktiven RFID-Transponder detektiert hat, wird die objektseitige Baugruppe mithilfe eines Einschaltsignals des passiven RFID-Transponders wieder eingeschaltet, was in der Regel einen Bootvorgang für einen Prozessor der elektronischen Komponenten einschließen wird. Auch die Positionsermittlungseinheit der objektseitigen Baugruppe nimmt wieder ihre Funktion auf, ermittelt eine erste Positionsinformation und übermittelt sie an die zentrale Steuereinheit. Hierfür muss freilich erst eine Datenverbindung hergestellt werden, wobei vorzugsweise vorgeschlagen wird, dass vor der Übermittlung der von der Positionsermittlungseinheit der objektseitigen Baugruppe ermittelten Position des Objektes zunächst eine Prüfung auf Verfügbarkeit einer bidirektionalen Datenverbindung als Teil eines lokalen Kommunikationsnetzwerkes auf der Basis von erdgebundenen Funksendern erfolgt, und bei mangelnder Verfügbarkeit eine Prüfung auf Verfügbarkeit einer bidirektionalen Datenverbindung als Teil eines globalen Kommunikationsnetzwerkes auf der Basis von satellitengestützten Funksendern. Diese Vorgangsweise ist insbesondere bei Anwendungen in der Luftfahrt vorteilhaft, weil nicht jeder Zielflughafen über entsprechende Kommunikationsinfrastruktur verfügt. In diesem Fall erfolgt über satellitengestützte Funksender etwa mit einer zentralen Steuereinheit der IATA ein Datenaustausch, der zumindest eine Positionsinformation sowie allfällig weitere Informationen über den Zustand des ULD umfasst, sodass zumindest der aktuelle ULD-Status bekannt ist. Freilich kann auch bei Verfügbarkeit eines lokalen Kommunikationsnetzwerkes vorgesehen sein, dass bestimmte Daten stets auch über ein globales Kommunikationsnetzwerk beispielsweise an eine zentrale Steuereinheit der IATA gesendet werden, um für zukünftige Auswertungen etwa im Zuge juristischer Auseinandersetzungen zur Verfügung zu stehen.

Des Weiteren umfasst die vorliegende Erfindung auch eine Anordnung zur Detektion und Sicherstellung der korrekten Zufuhr eines mit elektronischen Komponenten versehenen Objektes von einem Zufuhrbereich entlang einer vorgegebenen Zufuhrrichtung in einen dem Objekt zugeordneten Zielbereich in einem elektronisch inaktiven Zustand des Objektes. Die Anordung umfasst den Objekt, eine zentrale Steuereinheit und eine für den Zufuhrbereich vorgesehenen Baugruppe, zufuhrbereichsseitige Baugruppe genannt.

Die zufuhrbereichsseitige Baugruppe umfasst zwei aktive RFID-Transponder, deren jeweilige Signalbereiche in Zufuhrrichtung aufeinanderfolgend unterscheidbar angeordnet sind, und am Objekt eine die elektronischen Komponenten enthaltende, objektseitige Baugruppe vorgesehen ist, die einen von den beiden aktiven RFID-Transpondern der zufuhrbereichsseitigen Baugruppe auslesbaren, passiven RFID-Transponder, sowie einen Schreibkopf und einem vom Schreibkopf mit einer den Zielbereich identifizierenden Zielbereichsinformation überschreibbaren Speicher für den passiven RFID-Transponder umfasst, wobei die beiden Baugruppen zum Austausch von Zielbereichsinformationen jeweils drahtlos über eine bidirektionale Datenverbindung mit der zentralen Steuereinheit verbunden sind, und die objektseitige Baugruppe mit einer vom passiven RFID-Transponder gesteuerten und bei aufeinanderfolgender Detektion der beiden Signalbereiche der aktiven RFID-Transponder die objektseitige Baugruppe zwischen einem elektronisch aktiven und einem elektronisch inaktiven Zustand schaltenden Umschaltelektronik versehen ist, und die zufuhrbereichsseitige Baugruppe mit einer Einrichtung zum Stoppen der Zufuhr des Objektes in den Zielbereich bei fehlender Übereinstimmung der vom passiven RFID-Transponder ausgelesenen Zielbereichsinformation mit der der zufuhrbereichsseitigen Baugruppe von der zentralen Steuereinheit übermittelten Zielbereichsinformation versehen ist.

Bei der Einrichtung zum Stoppen der Zufuhr des Objektes in den Zielbereich kann es sich um eine Anzeigeeinheit zur Anzeige der zutreffenden oder fehlenden Übereinstimmung der vom passiven RFID-Transponder ausgelesenen Zielbereichsinformation mit der der zufuhrbereichsseitigen Baugruppe von der zentralen Steuereinheit übermittelten Zielbereichsinformation handeln. Eine Möglichkeit zur Ausführung einer solchen Anzeigeeinheit besteht in der bereits erwähnten Ampel, die eine zutreffende Übereinstimmung der jeweiligen Zielbereichsinformationen optisch etwa in Form eines grünen Signals zur Anzeige bringt, und eine fehlende Übereinstimmung der jeweiligen Zielbereichsinformationen etwa in Form eines roten Signals. Ein vor Ort befindliches Bedienpersonal kann in weiterer Folge das betreffende Objekt ausselektieren und eine weitere Zufuhr des Objektes in den Zielbereich stoppen. Freilich kann es sich bei der Einrichtung zum Stoppen der Zufuhr des Objektes in den Zielbereich auch um eine automatisch tätige Einrichtung handeln, die beispielsweise eine Zufuhröffnung in den Zielbereich schließt, oder eine Transporteinrichtung zur Zufuhr des Objektes stoppt.

Wie bereits erwähnt ist die objektseitige Baugruppe vorzugsweise mit einer Positionsermittlungseinheit zur wiederholten Ermittlung der Position des Objektes versehen. Es wird aber vorzugsweise auch vorgeschlagen, dass auch die zufuhrbereichsseitige Baugruppe mit einer Positionsermittlungseinheit zur wiederholten Ermittlung der Position des Zufuhrbereiches versehen ist. Diese Positionsermittlungseinheit basiert etwa ebenfalls auf bekannten Technologien wie GPS, EGNOS oder DGPS und ermöglicht der zentralen Steuereinheit die Identifizierung sowie Überwachung der Bewegungen der zufuhrbereichsseitigen Baugruppe. Das ist insbesondere dann von Vorteil, wenn sich der Zufuhrbereich bewegt, etwa im Fall eines mobilen ULD-Ladesystems im Luftfahrtbereich. Falls ein Flugzeug beladen oder entladen werden muss, wird ihm am Flughafen eine Parkposition in einem bestimmten Flughafenbereich (Apron) vorgeschrieben. Diese Parkposition und der ihr verbundene Flughafenbereich sind ebenso wie Informationen über das zu beladende oder entladende Flugzeug der zentralen Steuereinheit bekannt. Aufgrund der Positionsermittlungseinheit der zufuhrbereichsseitigen Baugruppe kann die augenblickliche Position des mobilen Zufuhrbereiches überwacht werden und insbesondere festgestellt werden, ob er dem der Parkposition zugeordneten Flughafenbereich entspricht und somit die korrekte Position erreicht hat.

Vorzugsweise ist die objektseitige Baugruppe des Weiteren mit Sensoren zur Messung von Wärme, Gewicht, Feuchtigkeit, Helligkeit und/oder Erschütterung versehen. Diese Sensoren können beispielsweise Manipulationen am Objekt über die Messung von Erschütterungen detektieren, oder den augenblicklichen Zustand des Objekts hinsichtlich physikalischer Parameter wie Temperatur und Feuchtigkeit und dergleichen detektieren, oder auch logistische Parameter wie Beladezustand des Objekts und dergleichen über eine Messung des Gewichts detektieren. Die Messwerte dieser Sensoren können ebenfalls über die bidirektionale Datenverbindung an die zentrale Steuereinheit gesendet werden, die wie erwähnt Teil eines lokalen Kommunikationsnetzwerkes auf der Basis von erdgebundenen Funksendern sein kann, oder Teil eines globalen Kommunikationsnetzwerkes auf der Basis von satellitengestützten Funksendern.

Dieser Datenaustausch erfordert freilich eine Energieversorgung der objektseitigen Bauteilgruppe, die über Batterien oder Akkumulatoren sichergestellt werden kann. Ergänzend oder alternativ können auch Nanogeneratoren vorgesehen sein, die auch als "Energy harvesting"-Systeme bekannt sind. Diese Nanogeneratoren gewinnen elektrische Energie aus Quellen wie Umgebungstemperatur, Vibrationen oder Umgebungslicht für zumeist mobile Geräte mit geringer Leistung. Hierfür sind Maßnahmen zur Verringerung des Stromverbrauches der objektseitigen Baugruppe sehr vorteilhaft. Beispielsweise kann vorgesehen sein, dass die objektseitige Baugruppe in einen Energiesparmodus versetzt wird, falls Bewegungssensoren ein Ruhen des Objekts detektieren. Dabei werden alle stromverbrauchenden Komponenten der objektseitigen Baugruppe vorübergehend abgeschaltet, insbesondere jene zur Übermittlung von Daten an die zentrale Steuereinheit, bis die Bewegungssensoren wieder eine Bewegung des Objekts detektieren. Zudem ist es vorteilhaft, wenn mithilfe eines in der objektseitigen Baugruppe vorgesehenen Prozessors eine Aufbereitung aller Daten erfolgt, die an die zentrale Steuereinheit übermittelt werden sollen. Diese Aufbereitung dient der Reduktion des Datenvolumens und gegebenenfalls auch einer Codierung der Daten, bevor sie an die zentrale Steuereinheit übertragen werden.

Die Erfindung wird in weiterer Folge anhand von Ausführungsbeispielen mithilfe der beiliegenden Zeichnungen näher erläutert. Es zeigen hierbei die
Fig. 1 eine schematische Darstellung einer erfindungsgemäßen Anordnung von Zufuhrbereich, Zielbereich und eines dem Zielbereich zuzuführenden Objektes,
Fig. 2 eine schematische Darstellung einer Ausführungsform der objektseitigen Baugruppe, und die
Fig. 3 eine schematische Darstellung einer Ausführungsform der zufuhrbereichsseitigen Baugruppe.

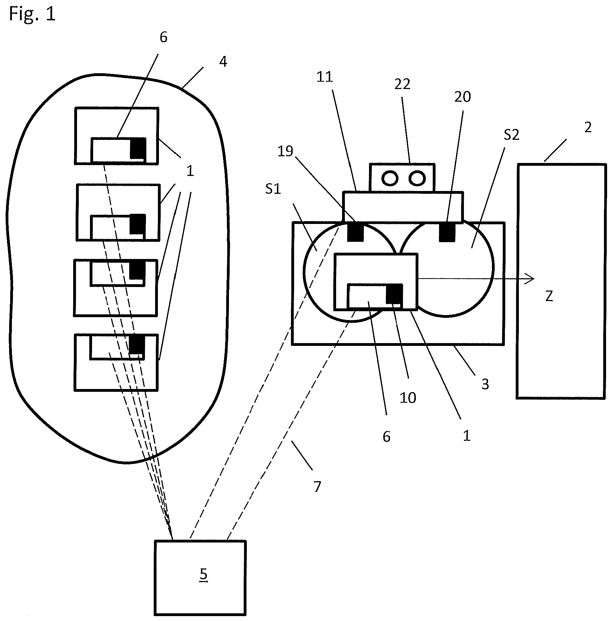

Die Erfindung wird im Folgenden für eine Ausführungsform zur Anwendung im Luftfahrtbereich erläutert. Dabei handelt es sich bei den Objekten 1 um ULDs, beim Zielbereich 2 um den Frachtraum eines Flugzeugs und beim Zufuhrbereich 3 um ein ULD-Ladesystem (siehe Fig. 1). Je nach Flughafengröße befinden sich einzelne, mehrere oder auch Hunderte ULDs als Objekte 1 im Sicherheitsbereich eines Flughafens. Die ULDs verlassen in der Regel den Sicherheitsbereich nur über den Luftweg an Bord eines Flugzeugs. Frachtgut, das vom Flughafen aus weiter transportiert wird, muss noch im Sicherheitsbereich den ULDs entnommen und in andere Transportbehälter umgeladen werden.

Die ULDs werden in einem Be- und Entladebereich 4 des Sicherheitsbereiches mit Frachtgut beladen. Dabei erfolgen gegebenenfalls Zollkontrollen und andere Sicherheitskontrollen. Das Frachtgut kann aus nahezu allen Bereichen der Warenwirtschaft kommen und unterliegt nur gewissen Restriktionen hinsichtlich seiner Größe und Gefährlichkeit. Welches Frachtgut nicht oder nur unter bestimmten Sicherheitsmaßnahmen transportiert werden darf ist in den internationalen Regeln zur Luftfracht der IATA und lokaler Landesbehörden festgelegt. In diesem Regelwerk ist auch der Umgang mit den ULDs auf dem Flughafen beschrieben. Aufgrund fehlender technischer Möglichkeiten können jedoch zum Anmeldezeitpunkt noch nicht alle Regeln gänzlich und zu jeder Zeit eingehalten werden. Die ULDs werden nach dem Beladen mit Frachtgut und vor dem Transport zum ihm zugeordneten Flugzeug verschlossen und gegebenenfalls plombiert.

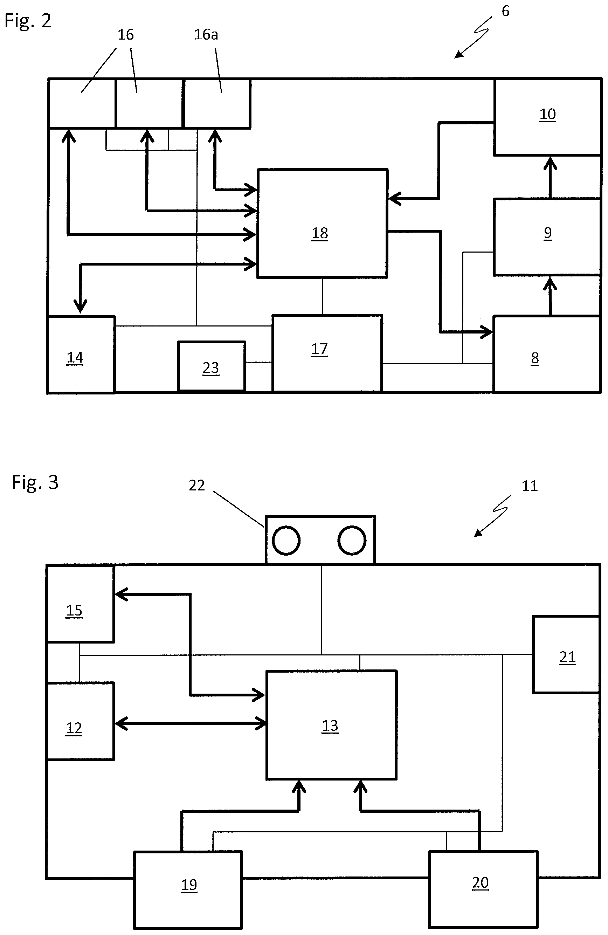

In herkömmlicher Weise wird der ULD mithilfe von Beschriftungstaschen oder Barcodes mit einer Zielbereichsinformation zur Identifizierung des ihm zugeordneten Zielbereiches versehen, etwa mit der dem ULD zugeordneten Flugzeugnummer. Erfindungsgemäß erhält das im vorliegenden Ausführungsbeispiel als ULD ausgeführte Objekt 1 die Zielbereichsinformation hingegen über eine zentrale Steuereinheit 5 der Flughafenüberwachung. Diese Zielbereichsinformation wird der objektseitigen Baugruppe 6 über ein drahtloses, lokales Kommunikationsnetzwerk, beispielsweise auf der Basis von GSM, Bluetooth, WLAN, ZigBee oder einer anderen Nahbereichskommunikationstechnologie, mithilfe einer bidirektionalen Datenverbindung 7 übermittelt. Die objektseitige Baugruppe 6 empfängt diese Zielbereichsinformation über eine objektseitige Empfangs- und Sendeeinheit 8, von wo sie an einen Schreibkopf 9 für einen überschreibbaren Speicher eines passiven RFID-Transponders 10 der objektseitigen Baugruppe 6 weitergeleitet wird (siehe Fig. 2). Der Schreibkopf 9 beschreibt somit den Speicher des passiven RFID-Transponders 10 mit der Zielbereichsinformation, wo sie auslesbar gespeichert bleibt.

Des Weiteren wird die Zielbereichsinformation von der zentralen Steuereinheit 5 der Flughafenüberwachung auch der zufuhrbereichsseitigen Baugruppe 11 übermittelt, die sich im Zufuhrbereich befindet und beispielsweise an einem ULD-Ladesystem angeordnet ist. Diese Zielbereichsinformation wird der zufuhrbereichsseitigen Baugruppe 6 ebenfalls über ein drahtloses, lokales Kommunikationsnetzwerk, beispielsweise auf der Basis von GSM, Bluetooth, WLAN, ZigBee oder einer anderen Nahbereichskommunikationstechnologie, mithilfe einer bidirektionalen Datenverbindung 7 übermittelt. Die zufuhrbereichsseitige Baugruppe 11 empfängt diese Zielbereichsinformation über eine zufuhrbereichsseitige Empfangs- und Sendeeinheit 12, von wo sie an einen Datenspeicher eines zufuhrbereichsseitigen Prozessors 13 weitergeleitet wird (siehe Fig. 3). Die Zielbereichsinformation bleibt in weiterer Folge im Datenspeicher des zufuhrbereichsseitigen Prozessors 13 vorläufig gespeichert.

Falls ein Flugzeug beladen oder entladen werden muss, wird ihm am Flughafen eine Parkposition in einem bestimmten Flughafenbereich (Apron) vorgeschrieben. Diese Parkposition und der ihr zugeordnete Flughafenbereich sind ebenso wie Informationen über das zu beladende Flugzeug der zentralen Steuereinheit 5 bekannt. Diese Daten werden entweder von einem speziellen Airport Ortungssystem bereitgestellt, von einem Ground Radar oder über A-SMGCS (Advanced Surface Movement Guidance and Control System), die jeweils Stand der Technik sind. Grundsätzlich genügen aber auch die Daten, die ein Mode-S oder äquivalenter Transponder, der in jedem Flugzeug eingebaut ist, liefert. Diese Flugzeugdaten, die auch die Ground-Position des geparkten Flugzeuges und die genaue Flugzeug-Identifikation beinhalten, können mit Flugplandaten über das Flugziel fusioniert werden. Aus diesen Informationen wird von der zentralen Steuereinheit 5 eine Zielbereichsinformation generiert und wie oben beschrieben übermittelt.

Die als ULDs ausgeführten Objekte 1 müssen in weiterer Folge zu dieser Parkposition transportiert werden. Hierfür sind in der Regel eigene Transportmittel vorgesehen, die die ULDs zu dem an der Parkposition angeordneten ULD-Ladesystem bringen und dort abstellen. Zudem ist auch das ULD-Ladesystem in der Regel mobil ausgeführt, sodass es zu dieser Position transportiert werden muss. Zur Überwachung dieser Bewegungen ist die objektseitige Baugruppe 6 mit einer objektseitigen Positionsermittlungseinheit 14 zur wiederholten Ermittlung der Position des Objektes 1 versehen. Zudem ist auch die zufuhrbereichsseitige Baugruppe 11 mit einer zufuhrbereichsseitigen Positionsermittlungseinheit 15 zur wiederholten Ermittlung der Position des ULD-Ladesystems versehen. Diese Positionsermittlungseinheiten 14,15 basieren etwa auf bekannten Technologien wie GPS, EGNOS oder DGPS und ermöglichen der zentralen Steuereinheit 5 die Identifizierung sowie Überwachung der Bewegungen der objektseitigen Baugruppe 6 sowie der zufuhrbereichsseitigen Baugruppe 11. Aufgrund der objektseitigen Positionsermittlungseinheit 14 der objektseitigen Baugruppe 6 kann die augenblickliche Position des Objekts 1 überwacht werden und insbesondere festgestellt werden, ob eine Position dem der Parkposition zugeordneten Flughafenbereich entspricht und somit die korrekte Position erreicht wurde. Aufgrund der zufuhrbereichsseitigen Positionsermittlungseinheit 15 der zufuhrbereichsseitigen Baugruppe 11 kann die augenblickliche Position des mobilen Zufuhrbereiches 3 überwacht werden und insbesondere festgestellt werden, ob er dem der Parkposition zugeordneten Flughafenbereich entspricht und somit die korrekte Position erreicht hat.

Die elektronischen Komponenten der objektseitigen Baugruppe 6 befinden sich während des Transports des ULDs zum Flugzeug in einem aktiven Zustand. Objektseitige Sensoren 16 messen etwa ein allfälliges Öffnen des ULDs mithilfe von Helligkeitssensoren, allfällige Beschädigungen des ULDs mithilfe von Erschütterungssensoren, Beladezustand oder auch innere Parameter wie Temperatur, Luftfeuchtigkeit oder andere Zustandsparameter (siehe Fig. 2). Die Messwerte dieser Sensoren 16 werden in einem objektseitigen Prozessor 18 verarbeitet und gegebenenfalls über die objektseitige Empfangs- und Sendeeinheit 8 und die bidirektionale Datenverbindung 7 an die zentrale Steuereinheit 5 gesendet. Zudem ist im objektseitigen Prozessor 18 eine das Objekt 1 identifizierende Information gespeichert. ULDs beispielsweise sind durch einen Code identifizierbar, der aus einer Drei-Buchstaben-Kombination zur Identifizierung des Typs, gefolgt von einer 4- oder 5-stelligen Seriennummer und einem zweistelligen Kürzel zur Angabe des Besitzers, meist der IATA-Code der Fluggesellschaft, besteht.

Wie bereits erwähnt wurde, erfordert der Datenaustausch mit der zentralen Steuereinheit 5 eine Energieversorgung der objektseitigen Bauteilgruppe 6, die über eine Stromquelle 17 wie Batterien oder Akkumulatoren sichergestellt werden kann. Ergänzend oder alternativ kann auch ein Nanogenerator 23 vorgesehen sein, der über so genanntes "Energy harvesting" elektrische Energie aus Quellen wie Umgebungstemperatur, Vibrationen oder Umgebungslicht gewinnt und der Stromquelle 17 zuführt. Hierfür sind Maßnahmen zur Verringerung des Stromverbrauches der objektseitigen Baugruppe 6 sehr vorteilhaft. So ist es etwa vorteilhaft, wenn mithilfe des in der objektseitigen Baugruppe 6 vorgesehenen objektseitigen Prozessors 18 eine Aufbereitung aller Daten erfolgt, die über die objektseitige Empfangs- und Sendeeinheit 8 an die zentrale Steuereinheit 5 übermittelt werden sollen. Diese Aufbereitung dient der Reduktion des Datenvolumens und gegebenenfalls auch einer Codierung und/oder Verschlüsselung der Daten, bevor sie an die zentrale Steuereinheit 5 übertragen werden. Zudem kann vorgesehen sein, dass die objektseitige Baugruppe 6 in einen Energiesparmodus versetzt wird, falls Bewegungssensoren 16a ein Ruhen des Objekts 1 detektieren. Dabei werden über den objektseitigen Prozessor 18 alle stromverbrauchenden Komponenten der objektseitigen Baugruppe 6 vorübergehend abgeschaltet, insbesondere jene zur Übermittlung von Daten an die zentrale Steuereinheit 5, bis die Bewegungssensoren 16a wieder eine Bewegung des Objekts 1 detektieren. Ein konsequentes Energiemanagement für die objektseitige Baugruppe 6 ist vorteilhaft, um die objektseitige Baugruppe 6 möglichst autark betreiben zu können und somit auch unabhängig von vorhandener Infrastruktur am Flughafen zu sein.

Wie bereits erwähnt wurde, kann aufgrund der zufuhrbereichsseitigen Positionsermittlungseinheit 15 der zufuhrbereichsseitigen Baugruppe 11 auch die augenblickliche Position des im vorliegenden Ausführungsbeispiel als ULD-Ladesystem ausgeführten, mobilen Zufuhrbereiches 3 überwacht werden und insbesondere festgestellt werden, ob er dem der Parkposition zugeordneten Flughafenbereich entspricht und somit die korrekte Position erreicht hat. Das ULD-Ladesystem ist in der Regel als Hubvorrichtung ausgeführt, mit der das als ULD ausgeführte Objekt 1 auf das Niveau des Frachtraumes vertikal angehoben werden kann. Zudem verfügt das ULD-Ladesystem über Rollen oder Schienen, mit denen das Objekt 1 in horizontaler Richtung bewegt werden kann. Diese horizontale Richtung definiert die Zufuhrrichtung Z.

Die zufuhrbereichsseitige Baugruppe 11 verfügt über einen ersten, aktiven RFID-Transponder 19 mit einem ersten Signalbereich S1 und einen zweiten, aktiven RFID-Transponder 20 mit einem zweiten Signalbereich S2. Die zufuhrbereichsseitige Baugruppe 1 ist im Zufuhrbereich 3 so angeordnet, dass die beiden Signalbereiche S1 und S2 in Zufuhrrichtung Z aufeinanderfolgend angeordnet sind und vom passiven RFID-Transponder 10 der objektseitigen Baugruppe 6 passiert werden, sobald sich das Objekt 1 auf dem ULD-Ladesystem befindet und in Zufuhrrichtung Z bewegt wird (siehe auch Fig. 1). Die zufuhrbereichsseitige Baugruppe 11 verfügt ferner über eine Stromversorgung 21, die neben den zufuhrbereichsseitigen Prozessor 13 auch die beiden aktiven RFID-Transponder 19, 20 mit Energie versorgt. Die Stromversorgung 21 kann etwa an eine externe Energiequelle angeschlossen sein, die im Zufuhrbereich 3 in der Regel verfügbar ist.

Zufuhrbereichsseitig wird bei aufeinanderfolgender Detektion des passiven RFID-Transponders 10 der objektseitigen Baugruppe 6 mittels der beiden aktiven RFID-Transponder 19,20 der zufuhrbereichsseitigen Baugruppe 11, also beispielsweise bei einer Bewegung des Objektes 1 in den Zielbereich 2, die im passiven RFID-Transponder 10 gespeicherte Zielbereichsinformation ausgelesen und mit der im zufuhrbereichsseitigen Prozessor 13 gespeicherten Zielbereichsinformation verglichen. Bei fehlender Übereinstimmung wird die Zufuhr des Objektes 1 zum Zielbereich 2 gestoppt. Eine fehlende Übereinstimmung ist auch dann gegeben, wenn kein Vergleich vorgenommen werden konnte, etwa weil vom objektseitigen, passiven RFID-Transponder 10 keine Zielbereichsinformation ausgelesen werden konnte. Auf diese Weise wird sichergestellt, dass das Objekt 1 stets dem korrekten und ihm zugeordneten Zielbereich 2 zugeführt wird. Zur optischen Anzeige einer zutreffenden oder fehlenden Übereinstimmung der jeweiligen Zielbereichsinformationen ist im Zufuhrbereich 3 eine Anzeigeeinheit 22 angeordnet. Eine zutreffende Übereinstimmung der jeweiligen Zielbereichsinformationen kann auf der Anzeigeeinheit 22 beispielsweise in Form einer grünen Ampel angezeigt werden.

Eine fehlende Übereinstimmung der jeweiligen Zielbereichsinformationen kann auf der Anzeigeeinheit 22 beispielsweise in Form einer roten Ampel angezeigt werden. Im Zufuhrbereich 3 anwesendes Bedienpersonal kann in weiterer Folge die Zufuhr in den Zielbereich 2 stoppen und das betreffende Objekt 1 zur näheren Überprüfung aussortieren.

Objektseitig wird bei einer Bewegung des Objektes 1 in Zufuhrrichtung Z zunächst der dem Zielbereich 2 abgewandte, erste Signalbereich S1 vom passiven RFID-Transponder 10 detektiert und ein entsprechendes Signal im Speicher des passiven RFID-Transponders 10 gespeichert. Wird in weiterer Folge auch der dem Zielbereich 2 zugewandte, zweite Signalbereich S2 detektiert, kann auf einen Zufuhrvorgang in den Zielbereich 2 geschlossen werden. Bei einer solchen aufeinanderfolgenden Detektion des dem Zielbereich 2 abgewandten, ersten Signalbereiches S1 und des dem Zielbereich 2 zugewandten Signalbereiches S2 wird vom passiven RFID-Transponder 10 ein Ausschaltsignal generiert, das die objektseitige Baugruppe 6 in einen elektronisch inaktiven Zustand schaltet. In einem solchen elektronisch inaktiven Zustand ist das Objekt 1 insbesondere auch unfähig zur Emission modulierter elektromagnetischer Felder, indem beispielsweise auch die objektseitige Empfangs- und Sendeeinheit 8 für die bidirektionale Datenverbindung 7 mit der zentralen Steuereinheit 5 abgeschaltet wird. Erst wenn die beiden Signalbereiche S1, S2 der zufuhrbereichsseitigen, aktiven RFID-Transponder 19,20 vom objektseitigen, passiven RFID-Transponder 10 in umgekehrter Abfolge detektiert werden, also eine Bewegung entgegen der Zufuhrrichtung Z detektiert wurde, wird die objektseitige Baugruppe 6 mithilfe eines vom passiven RFID-Transponder 10 generierten Einschaltsignals wieder in einen elektronisch aktiven Zustand geschalten, in dem beispielsweise auch die Empfangs- und Sendeeinheit 8 für die bidirektionale Datenverbindung 7 mit der zentralen Steuereinheit 5 wieder in Betrieb gesetzt wird. Auf diese Weise wird sichergestellt, dass die objektseitige Baugruppe 6 erst dann abgeschaltet wird, wenn tatsächlich eine Zufuhrbewegung in den Zielbereich 2, also beispielsweise ein Verladevorgang eines ULD in den Frachtraum eines Flugzeuges, detektiert wird. Somit können Fehlabschaltungen vermieden werden. Andererseits ist ein Verladevorgang immer auch mit einer Abschaltung der die elektronischen Komponenten enthaltenden, objektseitigen Baugruppe 6 verbunden, sodass das Objekt 1 im Zuge des Verladevorganges zuverlässig in einen elektronisch inaktiven Zustand gebracht wird und einen elektronisch inaktiven Zustand einnimmt, sobald es im Zielbereich 2 ist, etwa an Bord eines Flugzeuges. Diese Abschaltung der elektronischen Komponenten bedarf auch keiner menschlichen Intervention durch Bedienpersonal, sodass Bedienfehler ausgeschlossen sind.

Vor Abschaltung der objektseitigen Baugruppe 6 kann insbesondere vorgesehen sein, dass im elektronisch noch aktiven Zustand der objektseitigen Baugruppe 6 bei Detektion der beiden im Zufuhrbereich 3 in Zufuhrrichtung Z aufeinanderfolgend angeordneten Signalbereiche S1,S2 der beiden aktiven RFID-Transponder 19,20 der zufuhrbereichsseitigen Baugruppe 11 mittels des am Objekt 1 angeordneten, passiven RFID-Transponders 10 die objektseitige Baugruppe 6 die zuletzt ermittelte Position des Objektes 1 über die bidirektionale Datenverbindung 7 an die zentrale Steuereinheit 5 sendet, bevor die objektseitige Baugruppe 6 mithilfe des vom passiven RFID-Transponder 10 generierten Ausschaltsignals in einen elektronisch inaktiven Zustand geschalten wird. Diese Übermittlung kann auch von einer entsprechenden Information begleitet sein, dass ein Zufuhrvorgang in den Zielbereich 2 von der objektseitigen Baugruppe 6 detektiert wurde und das Ausschaltsignal für die objektseitige Baugruppe 6 unmittelbar bevorsteht. Die zentrale Steuereinheit 5 speichert den erfolgreichen Verladevorgang und beendet vorläufig die Überwachung des betreffenden Objektes 1. Handelt es sich bei dem Objekt 1 um einen ULD, so wird die Überwachung des Objektes 1 beendet, da sich das Objekt 1 im Frachtraum eines Flugzeuges befindet.

Sobald das Objekt 1 den Zielbereich 2 wieder verlässt, etwa wenn es sich bei dem Objekt 1 um einen ULD handelt, der am Zielflughafen von einem Flugzeug entladen wird, und der passive RFID-Transponder 10 die beiden Signalbereiche S1, S2 der im Zufuhrbereich 3 installierten, aktiven RFID-Transponder 19, 20 detektiert hat, wird die objektseitige Baugruppe 6 mithilfe eines Einschaltsignals des passiven RFID-Transponders 10 wieder eingeschaltet, was in der Regel einen Bootvorgang für den objektseitigen Prozessor 18 einschließen wird. Auch die objektseitige Positionsermittlungseinheit 14 der objektseitigen Baugruppe 6 nimmt wieder ihre Funktion auf, ermittelt eine erste Positionsinformation und übermittelt sie an die zentrale Steuereinheit 5.

Hierfür muss freilich erst eine bidirektionale Datenverbindung 7 hergestellt werden, wobei vor der Übermittlung der von der objektseitigen Positionsermittlungseinheit 14 ermittelten Position des Objektes 1 zunächst eine Prüfung auf Verfügbarkeit einer bidirektionalen Datenverbindung 7 als Teil eines lokalen Kommunikationsnetzwerkes auf der Basis von erdgebundenen Funksendern erfolgt, und bei mangelnder Verfügbarkeit eine Prüfung auf Verfügbarkeit einer bidirektionalen Datenverbindung 7 als Teil eines globalen Kommunikationsnetzwerkes auf der Basis von satellitengestützten Funksendern. Diese Vorgangsweise ist insbesondere bei Anwendungen in der Luftfahrt vorteilhaft, weil nicht jeder Zielflughafen über entsprechende Kommunikationsinfrastruktur verfügt. In diesem Fall erfolgt über satellitengestützte Funksender etwa mit einer zentralen Steuereinheit der IATA ein Datenaustausch, der zumindest eine Positionsinformation sowie allfällig weitere Informationen über den Zustand des ULD umfasst, sodass zumindest der aktuelle ULD-Status bekannt ist.

Die eingesetzten Verfahren benötigen dabei keine zusätzliche Infrastruktur am Flughafen wie spezielle Antennensysteme auf dem Flughafen oder dergleichen. Die Übermittlung von Daten erfolgt durch automatische Selektion der jeweils bestgeeigneten Kommunikationswege entweder durch Nahbereichskommunikation wie Bluetooth, WLAN oder ZigBee, durch GSM-Technik über Mobilfunknetze, LTE, LORA oder dergleichen, oder durch direkte Satellitenkommunikation über SATCOM beispielsweise mit Iridium-Satelliten in Bereichen, in denen sonst keinerlei andere Systeme zur Verfügung stehen. Das erfindungsgemäße Verfahren ermöglicht zudem eine vollständige Überwachung der Objekte 1 außerhalb der Zielbereiche 2, insbesondere ihrer Position. Die vorliegende Erfindung erlaubt es zudem, die korrekte Zufuhr eines Objektes 1 in einen Zielbereich 2 zu erkennen und eine drohende Zufuhr in einen falschen Zielbereich 2 zu stoppen, und stellt auch sicher, dass das Objekt 1 im Zuge der Zufuhr in den Zielbereich 2 in einen elektronisch inaktiven Zustand gebracht wird.

### Bezugszeichenliste:

1 Objekt
2 Zielbereich
3 Zufuhrbereich
4 Be- und Entladebereich
5 zentrale Steuereinheit
6 objektseitige Baugruppe
7 bidirektionale Datenverbindung
8 objektseitige Empfangs- und Sendeeinheit
9 Schreibkopf
10 passiver RFID-Transponder
11 zufuhrbereichsseitige Baugruppe
12 zufuhrbereichsseitige Empfangs- und Sendeeinheit
13 zufuhrbereichsseitiger Prozessor
14 objektseitige Positionsermittlungseinheit
15 zufuhrbereichsseitige Positionsermittlungseinheit
16 objektseitige Sensoren
17 objektseitige Stromquelle
18 objektseitiger Prozessor
19 erster aktiver RFID-Transponder
20 zweiter aktiver RFID-Transponder
21 zufuhrbereichsseitige Stromversorgung
22 Anzeigeeinheit
23 Nanogenerator
S1 erster Signalbereich
S2 zweiter Signalbereich
Z Zufuhrrichtung

## Patentansprüche

1. Verfahren zur Detektion und Sicherstellung der korrekten Zufuhr eines mit elektronischen Komponenten versehenen Objektes (1) von einem Zufuhrbereich (3) entlang einer vorgegebenen Zufuhrrichtung (Z) in einen dem Objekt (1) zugeordneten Zielbereich (2) in einem elektronisch inaktiven Zustand des Objektes (1), **dadurch gekennzeichnet, dass** einer im Zufuhrbereich (3) angeordneten, zufuhrbereichsseitigen Baugruppe (11) und einer am Objekt (1) angeordneten und die elektronischen Komponenten enthaltenden, objektseitigen Baugruppe (6) von einer zentralen Steuereinheit (5) mithilfe einer bidirektionalen Datenverbindung (7) eine den Zielbereich (2) identifizierende Zielbereichsinformation übermittelt wird, mit der in der objektseitigen Baugruppe (6) ein überschreibbarer Speicher eines passiven RFID-Transponders (10) beschrieben wird, wobei bei Detektion zweier im Zufuhrbereich (3) in Zufuhrrichtung (Z) aufeinanderfolgend unterscheidbar angeordneter Signalbereiche (S1,S2) zweier aktiver RFID-Transponder (19,20) der zufuhrbereichsseitigen Baugruppe (11) mittels des am Objekt (1) angeordneten, passiven RFID-Transponders (10) die objektseitige Baugruppe (6) mithilfe eines vom passiven RFID-Transponder (10) generierten Ausschaltsignals in einen elektronisch inaktiven Zustand geschalten wird, falls die beiden Signalbereiche (S1,S2) in Zufuhrrichtung (Z) aufeinanderfolgend detektiert werden, und mithilfe eines vom passiven RFID-Transponder (10) generierten Einschaltsignals in einen elektronisch aktiven Zustand, falls die beiden Signalbereiche (S1,S2) entgegen der Zufuhrrichtung (Z) aufeinanderfolgend detektiert werden, und bei aufeinanderfolgender Detektion des passiven RFID-Transponders (10) der objektseitigen Baugruppe (6) mittels der beiden aktiven RFID-Transponder (19,20) der zufuhrbereichsseitigen Baugruppe (11) ein Vergleich der im passiven RFID-Transponder (10) gespeicherten und von den aktiven RFID-Transpondern (19,20) ausgelesenen Zielbereichsinformation mit der der zufuhrbereichsseitigen Baugruppe (11) von der zentralen Steuereinheit (5) übermittelten Zielbereichsinformation erfolgt, wobei bei fehlender Übereinstimmung der jeweiligen Zielbereichsinformationen die Zufuhr des Objektes (1) in den Zielbereich (2) gestoppt wird.

2. Verfahren nach Anspruch 1, **dadurch gekennzeichnet, dass** die zutreffende oder fehlende Übereinstimmung der jeweiligen Zielbereichsinformationen mithilfe einer im Zufuhrbereich (3) angeordneten Anzeigeeinheit (22) angezeigt wird.

3. Verfahren nach Anspruch 1 oder 2, **dadurch gekennzeichnet, dass** im elektronisch aktiven Zustand der objektseitigen Baugruppe (6) mithilfe einer objektseitigen Positionsermittlungseinheit (14) der objektseitigen Baugruppe (6) die Position des Objektes (1) wiederholt ermittelt und über die bidirektionale Datenverbindung (7) an die zentrale Steuereinheit (5) gesendet wird.

4. Verfahren nach Anspruch 3, **dadurch gekennzeichnet, dass** im elektronisch aktiven Zustand der objektseitigen Baugruppe (6) bei Detektion der beiden im Zufuhrbereich (3) in Zufuhrrichtung (Z) aufeinanderfolgend angeordneten Signalbereiche (S1,S2) der beiden aktiven RFID-Transponder (19,20) der zufuhrbereichsseitigen Baugruppe (11) mittels des am Objekt (1) angeordneten, passiven RFID-Transponders (10) die objektseitige Baugruppe (6) die zuletzt ermittelte Position des Objektes (1) über die bidirektionale Datenverbindung (7) an die zentrale Steuereinheit (5) sendet, bevor die objektseitige Baugruppe (6) mithilfe des vom passiven RFID-Transponder (10) generierten Ausschaltsignals in einen elektronisch inaktiven Zustand geschalten wird.

5. Verfahren nach Anspruch 3 oder 4, **dadurch gekennzeichnet, dass** vor der Übermittlung der von der objektseitigen Positionsermittlungseinheit (14) der objektseitigen Baugruppe (6) ermittelten Position des Objektes (1) zunächst eine Prüfung auf Verfügbarkeit einer bidirektionalen Datenverbindung (7) als Teil eines lokalen Kommunikationsnetzwerkes auf der Basis von erdgebundenen Funksendern erfolgt, und bei mangelnder Verfügbarkeit eine Prüfung auf Verfügbarkeit einer bidirektionalen Datenverbindung (7) als Teil eines globalen Kommunikationsnetzwerkes auf der Basis von satellitengestützten Funksendern.

6. Anordnung zur Detektion und Sicherstellung der korrekten Zufuhr eines mit elektronischen Komponenten versehenen Objektes (1) von einem Zufuhrbereich (3) entlang einer vorgegebenen Zufuhrrichtung (Z) in einen dem Objekt (1) zugeordneten Zielbereich (2) in einem elektronisch inaktiven Zustand des Objektes (1) umfassend den Objekt, eine zentrale Steuereinheit und eine für den Zufuhrbereich vorgesehenen Baugruppe, zufuhrbereichsseitige Baugruppe genannt , **dadurch gekennzeichnet, dass** die zufuhrbereichsseitige Baugruppe (11) zwei aktive RFID-Transponder (19,20) umfasst, deren jeweilige Signalbereiche (S1,S2) in Zufuhrrichtung (Z) aufeinanderfolgend unterscheidbar angeordnet sind, und am Objekt (1) eine die elektronischen Komponenten enthaltende, objektseitige Baugruppe (6) vorgesehen ist, die einen von den beiden aktiven RFID-Transpondern (19,20) der zufuhrbereichsseitigen Baugruppe (11) auslesbaren, passiven RFID-Transponder (10), sowie einen Schreibkopf (9) und einem vom Schreibkopf (9) mit einer den Zielbereich (2) identifizierenden Zielbereichsinformation überschreibbaren Speicher für den passiven RFID-Transponder (10) umfasst, wobei die beiden Baugruppen (6,11) zum Austausch von Zielbereichsinformationen jeweils drahtlos über eine bidirektionale Datenverbindung (7) mit der zentralen Steuereinheit (5) verbunden sind, und die objektseitige Baugruppe (6) mit einer vom passiven RFID-Transponder (10) gesteuerten und bei aufeinanderfolgender Detektion der beiden Signalbereiche (S1,S2) der aktiven RFID-Transponder (19,20) die objektseitige Baugruppe (6) zwischen einem elektronisch aktiven und einem elektronisch inaktiven Zustand schaltenden Umschaltelektronik versehen ist, und die zufuhrbereichsseitige Baugruppe (11) mit einer Einrichtung zum Stoppen der Zufuhr des Objektes (1) in den Zielbereich (2) bei fehlender Übereinstimmung der vom passiven RFID-Transponder (10) ausgelesenen Zielbereichsinformation mit der der zufuhrbereichsseitigen Baugruppe (11) von der zentralen Steuereinheit (5) übermittelten Zielbereichsinformation versehen ist.

7. Anordnung nach Anspruch 6, **dadurch gekennzeichnet, dass** es sich bei der Einrichtung zum Stoppen der Zufuhr des Objektes (1) in den Zielbereich (2) um eine Anzeigeeinheit (22) zur Anzeige der zutreffenden oder fehlenden Übereinstimmung der vom passiven RFID-Transponder (10) ausgelesenen Zielbereichsinformation mit der der zufuhrbereichsseitigen Baugruppe (11) von der zentralen Steuereinheit (5) übermittelten Zielbereichsinformation handelt.

8. Anordnung nach Anspruch 6 oder 7, **dadurch gekennzeichnet, dass** die objektseitige Baugruppe (6) mit einer objektseitigen Positionsermittlungseinheit (14) zur wiederholten Ermittlung der Position des Objektes (1) versehen ist.

9. Anordnung nach einem der Ansprüche 6 bis 8, **dadurch gekennzeichnet, dass** die zufuhrbereichsseitige Baugruppe (11) mit einer zufuhrbereichsseitigen Positionsermittlungseinheit (15) zur wiederholten Ermittlung der Position des Zufuhrbereiches (3) versehen ist.

10. Anordnung nach einem der Ansprüche 6 bis 9, **dadurch gekennzeichnet, dass** die objektseitige Baugruppe (6) mit Sensoren (16) zur Messung von Wärme, Feuchtigkeit, Helligkeit und/oder Erschütterung versehen ist.

11. Anordnung nach einem der Ansprüche 6 bis 10, **dadurch gekennzeichnet, dass** die bidirektionale Datenverbindung (7) Teil eines lokalen Kommunikationsnetzwerkes auf der Basis von erdgebundenen Funksendern ist.

12. Anordnung nach einem der Ansprüche 6 bis 11, **dadurch gekennzeichnet, dass** die bidirektionale Datenverbindung (7) Teil eines globalen Kommunikationsnetzwerkes auf der Basis von satellitengestützten Funksendern ist.

13. Anordnung nach einem der Ansprüche 6 bis 12, **dadurch gekennzeichnet, dass** es sich bei dem Objekt (1) um einen ULD-Container handelt, bei dem Zufuhrbereich (3) um ein ULD-Ladesystem, und bei dem Zielbereich (2) um den Frachtraum eines Flugzeuges.

## Claims

1. Method for detecting and ensuring the correct supply of an object (1) provided with electronic components from a supply region (3) along a predetermined supply direction (Z) into a target region (2) assigned to the object (1) in an electronically inactive state of the object (1), **characterized in that** an assembly (11) arranged in the supply region (3) on the supply region side and an assembly (6) arranged on the object (1) on the object side and containing the electronic components are transmitted a target region information item identifying the target region (2) by means of a central control unit (5) with the aid of a bidirectional data link (7), with which a rewritable memory of a passive RFID transponder (10) is written in the object-side assembly (6), wherein, upon detection of two signal regions (S1, S2) of two active RFID transponders (19, 20) of the supply-region-side assembly (11), which signal regions (S1, S2) are arranged in succession in a distinguishable manner in the supply direction (Z), by means of the passive RFID transponder (10) arranged on the object (1), the object-side assembly (6) is switched into an electronically inactive state with the aid of a switch-off signal generated by the passive RFID transponder (10) if the two signal regions (S1, S2) are detected consecutively in the supply direction (Z), and into an electronically active state with the aid of a switch-on signal generated by the passive RFID transponder (10) if the two signal regions (S1, S2) are detected consecutively against the supply direction (Z), and in the case of successive detection of the passive RFID transponder (10) of the object-side assembly (6) by means of the two active RFID transponders (19, 20) of the supply-region-side assembly (11), a comparison of the target region information item stored in the passive RFID transponder (10) and read by the active RFID transponders (19, 20) with the target region information item transmitted by the central control unit (5) to the supply-region-side assembly (11), wherein the supply of the object (1) to the target region (2) is stopped if the respective target region information items do not match.

2. Method according to claim 1, **characterized in that** the applicable or missing match of the respective target region information items is indicated with the aid of a display unit (22) arranged in the supply region (3).

3. Method according to claim 1 or 2, **characterized in that** in the electronically active state of the object-side assembly (6), the position of the object (1) is repeatedly determined with the aid of an object-side position determination unit (14) of the object-side assembly (6) and sent to the central control unit (5) via the bidirectional data link (7).

4. Method according to claim 3, **characterized in that,** in the electronically active state of the object-side assembly (6), upon detection of the two signal regions (S1, S2) of the two active RFID transponders (19, 20) of the supply-region-side assembly (11), which signal regions are arranged successively in the supply direction (Z) in the supply region (3), by means of the passive RFID transponder (10) arranged on the object (1), the object-side assembly (6) transmits the last determined position of the object (1) to the central control unit (5) via the bidirectional data link (7) before the object-side assembly (6) is switched to an electronically inactive state with the aid of the switch-off signal generated by the passive RFID transponder (10).

5. Method according to claim 3 or 4, **characterized in that,** before the position of the object (1) determined by the object-side position determination unit (14) of the object-side assembly (6) is transmitted, a check is first made for the availability of a bidirectional data link (7) as part of a local communication network based on earthbound radio transmitters, and, if there is a lack of availability, a check is made for the availability of a bidirectional data link (7) as part of a global communication network based on satellite-based radio transmitters.

6. Arrangement for detecting and ensuring the correct supply of an object (1) provided with electronic components from a supply region (3) along a predetermined supply direction (Z) into a target region (2) assigned to the object (1) in an electronically inactive state of the object (1), comprising the object, a central control unit and an assembly provided for the supply region, referred to as a supply-region-side assembly, **characterized in that** the supply-region-side assembly (11) comprises two active RFID transponders (19, 20) whose respective signal ranges (S1, S2) are arranged such that they can be distinguished one from the other successively in the supply direction (Z), and an object-side assembly (6) which contains the electronic components is provided on the object (1), which assembly (6) has a passive RFID transponder (10) which can be read out by the two active RFID transponders (19, 20) of the supply-region-side assembly (11) as well as a write head (9) and a memory for the passive RFID transponder (10), which memory can be overwritten by the write head (9) with a target region information item identifying the target region (2), wherein the two assemblies (6, 11) are each wirelessly connected to the central control unit (5) via a bidirectional data connection (7) for the exchange of target region information items, and the object-side assembly (6) is provided with changeover electronics which switch the object-side assembly (6) between an electronically active and an electronically inactive state controlled by the passive RFID transponder (10) and upon successive detection of the two signal regions (S1, S2) of the active RFID transponders (19, 20), and the supply-region-side assembly (11) is provided with a device for stopping the supply of the object (1) into the target region (2) if the target region information item read out from the passive RFID transponder (10) does not match the target region information item transmitted to the supply-region-side assembly (11) by the central control unit (5).

7. Arrangement according to claim 6, **characterized in that** the device for stopping the supply of the object (1) into the target region (2) is a display unit (22) for displaying the applicable matching or lack of matching of the target region information item read out from the passive RFID transponder (10) with the target region information item transmitted to the supply-region-side assembly (11) by the central control unit (5).

8. Arrangement according to claim 6 or 7, **characterized in that** the object-side assembly (6) is provided with an object-side position determination unit (14) for repeatedly determining the position of the object (1).

9. Arrangement according to one of claims 6 to 8, **characterized in that** the supply-region-side assembly (11) is provided with a supply-region-side position determination unit (15) for repeatedly determining the position of the supply region (3).

10. Arrangement according to one of claims 6 to 9, **characterized in that** the object-side assembly (6) is provided with sensors (16) for measuring heat, humidity, brightness and/or vibration.

11. Arrangement according to one of claims 6 to 10, **characterized in that** the bidirectional data link (7) is part of a local communication network based on earthbound radio transmitters.

12. Arrangement according to one of claims 6 to 11, **characterized in that** the bidirectional data link (7) is part of a global communication network based on satellite-based radio transmitters.

13. Arrangement according to one of claims 6 to 12, **characterized in that** the object (1) is a ULD container, the supply region (3) is a ULD loading system, and the target region (2) is the cargo hold of an aircraft.

## Revendications

1. Procédé pour détecter et assurer l'amenée correcte d'un objet (1) pourvu de composants électroniques depuis une zone d'amenée (3) suivant un sens d'amenée (Z) prédéfini dans une zone cible (2) associée à l'objet (1) dans un état électroniquement inactif de l'objet (1), **caractérisé en ce qu'**une information de zone cible identifiant la zone cible (2) est transmise par une unité de commande centrale (5) à l'aide d'une liaison de données bidirectionnelle (7) à un module côté zone d'amenée (11), disposé dans la zone d'amenée (3), et à un module côté objet (6), disposé sur l'objet (1) et contenant les composants électroniques, avec laquelle une mémoire réinscriptible d'un transpondeur RFID passif (10) est écrite dans le module côté objet (6), dans lequel, en cas de détection de deux zones de signal (S1, S2) disposées successivement de manière différenciable dans la zone d'amenée (3) dans le sens d'amenée (Z) de deux transpondeurs RFID actifs (19, 20) du module côté zone d'amenée (11) au moyen du transpondeur RFID passif (10) disposé sur l'objet (1), le module côté objet (6) est commuté dans un état électroniquement inactif à l'aide d'un signal de désactivation généré par le transpondeur RFID passif (10) si les deux zones de signal (S1, S2) sont détectées successivement dans le sens d'amenée (Z), et dans un état électroniquement actif à l'aide d'un signal d'activation généré par le transpondeur RFID passif (10) si les deux zones de signal (S1, S2) sont détectées successivement dans le sens opposé au sens d'amenée (Z), et, en cas de détection successive du transpondeur RFID passif (10) du module côté objet (6) au moyen des deux transpondeurs RFID actifs (19, 20) du module côté zone d'amenée (11), une comparaison de l'information de zone cible enregistrée dans le transpondeur RFID passif (10) et lue par les transpondeurs RFID actifs (19, 20) avec l'information de zone cible transmise au module côté zone d'amenée (11) par l'unité de commande centrale (5) est effectuée, l'amenée de l'objet (1) dans la zone cible (2) étant stoppée en cas de non-concordance des informations de zone cible respectives.

2. Procédé selon la revendication 1, **caractérisé en ce que** la concordance ou la non-concordance des informations de zone cible respectives est indiquée à l'aide d'une unité d'affichage (22) disposée dans la zone d'amenée (3).

3. Procédé selon la revendication 1 ou 2, **caractérisé en ce que**, dans l'état électroniquement actif du module côté objet (6), la position de l'objet (1) est déterminée de manière répétée à l'aide d'une unité de détermination de position côté objet (14) du module côté objet (6) et envoyée à l'unité de commande centrale (5) via la liaison de données bidirectionnelle (7).

4. Procédé selon la revendication 3, **caractérisé en ce que**, dans l'état électroniquement actif du module côté objet (6), en cas de détection des deux zones de signal (S1, S2) disposées successivement dans la zone d'amenée (3) dans le sens d'amenée (Z) des deux transpondeurs RFID actifs (19, 20) du module côté zone d'amenée (11) au moyen du transpondeur RFID passif (10) disposé sur l'objet (1), le module côté objet (6) envoie la dernière position déterminée de l'objet (1) à l'unité de commande centrale (5) via la liaison de données bidirectionnelle (7) avant que le module côté objet (6) ne soit commuté dans un état électroniquement inactif à l'aide du signal de désactivation généré par le transpondeur RFID passif (10).

5. Procédé selon la revendication 3 ou 4, **caractérisé en ce que**, avant la transmission de la position de l'objet (1) déterminée par l'unité de détermination de position côté objet (14) du module côté objet (6), on effectue d'abord un contrôle de la disponibilité d'une liaison de données bidirectionnelle (7) faisant partie d'un réseau de communication local à base d'émetteurs radio terrestres et, en cas de manque de disponibilité, un contrôle de la disponibilité d'une liaison de données bidirectionnelle (7) faisant partie d'un réseau de communication global à base d'émetteurs radio satellitaires.

6. Agencement pour détecter et assurer l'amenée correcte d'un objet (1) pourvu de composants électroniques depuis une zone d'amenée (3) suivant un sens d'amenée (Z) prédéfini dans une zone cible (2) associée à l'objet (1) dans un état électroniquement inactif de l'objet (1), comprenant l'objet, une unité de commande centrale et un module prévu pour la zone d'amenée, appelé module côté zone d'amenée, **caractérisé en ce que** le module côté zone d'amenée (11) comprend deux transpondeurs RFID actifs (19, 20) dont les zones de signal respectives (S1, S2) sont disposées successivement de manière différenciable dans le sens d'amenée (Z), et il est prévu sur l'objet (1) un module côté objet (6) contenant les composants électroniques, qui comprend un transpondeur RFID passif (10) pouvant être lu par les deux transpondeurs RFID actifs (19, 20) du module côté zone d'amenée (11), ainsi qu'une tête d'écriture (9) et une mémoire pour le transpondeur RFID passif (10) pouvant être réécrite par la tête d'écriture (9) avec une information de zone cible identifiant la zone cible (2), les deux modules (6, 11) étant reliés chacun sans fil à l'unité de commande centrale (5) via une liaison de données bidirectionnelle (7) pour l'échange d'informations de zone cible, et le module côté objet (6) étant pourvu d'une électronique de commutation commandée par le transpondeur RFID passif (10), qui commute le module côté objet (6) entre un état électroniquement actif et un état électroniquement inactif en cas de détection successive des deux zones de signal (S1, S2) des transpondeurs RFID actifs (19, 20), et le module côté zone d'amenée (11) étant pourvu d'un moyen pour stopper l'amenée de l'objet (1) dans la zone cible (2) en cas de non-concordance entre l'information de zone cible lue par le transpondeur RFID passif (10) et l'information de zone cible transmise au module côté zone d'amenée (11) par l'unité de commande centrale (5).

7. Agencement selon la revendication 6, **caractérisé en ce que** le moyen pour stopper l'amenée de l'objet (1) dans la zone cible (2) est une unité d'affichage (22) servant à afficher la concordance ou la non-concordance entre l'information de zone cible lue par le transpondeur RFID passif (10) et l'information de zone cible transmise au module côté zone d'amenée (11) par l'unité de commande centrale (5).

8. Agencement selon la revendication 6 ou 7, **caractérisé en ce que** le module côté objet (6) est pourvu d'une unité de détermination de position côté objet (14) pour déterminer de manière répétée la position de l'objet (1).

9. Agencement selon l'une des revendications 6 à 8, **caractérisé en ce que** le module côté zone d'amenée (11) est pourvu d'une unité de détermination de position côté zone d'amenée (15) pour déterminer de manière répétée la position de la zone d'amenée (3).

10. Agencement selon l'une des revendications 6 à 9, **caractérisé en ce que** le module côté objet (6) est pourvu de capteurs (16) pour mesurer la chaleur, l'humidité, la luminosité et/ou les vibrations.

11. Agencement selon l'une des revendications 6 à 10, **caractérisé en ce que** la liaison de données bidirectionnelle (7) fait partie d'un réseau de communication local à base d'émetteurs radio terrestres.

12. Agencement selon l'une des revendications 6 à 11, **caractérisé en ce que** la liaison de données bidirectionnelle (7) fait partie d'un réseau de communication global à base d'émetteurs radio satellitaires.

13. Agencement selon l'une des revendications 6 à 12, **caractérisé en ce que** l'objet (1) est un conteneur ULD, la zone d'amenée (3) est un système de chargement ULD et la zone cible (2) est la soute d'un aéronef.
